# EUROPEAN PATENT SPECIFICATION

(11) **EP 1 258 851 B1**
(45) Date of publication and mention of the grant of the patent: **08.12.2004**
(21) Application number: 02003952.5
(22) Date of filing: 22.02.2002
(51) Int. Cl.: G08G 1/0968, G08G 1/0969, G01C 21/34, G01C 21/36, G08G 1/123, G01C 21/26

(54) **Navigation apparatus**
Navigationsgerät
Dispositif de navigation

(30) Priority: 17.05.2001 JP 2001148225
(43) Date of publication of application: 20.11.2002
(73) Proprietor: MATSUSHITA ELECTRIC INDUSTRIAL CO., LTD., Kadoma-shi, Osaka-fu (JP)
(72) Inventor: Sakamoto, Kiyomi, Ikoma-shi, Nara-ken (JP)
(74) Representative: Gassner, Wolfgang, Dr.

(56) References cited:
- WO-A-00/63866
- GB-A- 2 298 539
- PATENT ABSTRACTS OF JAPAN vol. 1997, no. 07, 31 July 1997 (1997-07-31) & JP 09 081804 A (NEC CORP), 28 March 1997 (1997-03-28)

## Description

### BACKGROUND OF THE INVENTION

### Field of the Invention

The present invention relates to a navigation apparatus, and more particularly to a navigation apparatus which provides route guidance by presenting various kinds of information when a user is about to take a ride on a train, a bus, or the like.

### Description of the Background Art

A conventional navigation apparatus operates by receiving a starting location and a destination location inputted by a user who carries the apparatus, searches for possible routes from the starting location to the destination location in advance, and provides route guidance to the user. Therefore, when a current position of the user has deviated a certain distance from a route which was determined through the search, the user becomes aware of the deviation from the route guidance.

When a user is heading for a desired destination by using trains, buses, etc., which are operated along a predetermined route, the user will typically select a train station or a bus stop (at which the user intends to go onboard) as a transitional point. Therefore, once the user deviates a certain distance from the train station or bus stop which has been selected as a transitional point, the user will become aware that the user has deviated from the route guidance, see for example GB-A-2 298 539.

However, conventional navigation apparatuses do not provide any special kind of route guidance at train stations or bus stops. As a result, even if a user erroneously takes a train, a bus, etc., which heads for the wrong destination, the user will only know the deviation from the suggested route based on the regular type of route guidance.

That is, a conventional navigation apparatus does not provide an advance alarm to a user who is going to take a transportation vehicle, e.g., a train or a bus, which is heading for the wrong scheduled destination, although it is capable of later informing the user that he or she has taken the wrong ride.

Moreover, other than the usual route guidance, a conventional navigation apparatus does not provide various kinds of information which can help a user take a transportation vehicle that transports the user to the right destination or are otherwise helpful.

### SUMMARY OF THE INVENTION

Therefore, an object of the present invention is to provide a navigation apparatus which is capable of alarming a user before the user takes a transportation vehicle that is heading for an incorrect destination, and presenting to the user various kinds of information which can help a user take a transportation vehicle that transports the user to the right destination or are otherwise helpful.

The present invention has the following features to attain the object above.

A first aspect of the present invention is directed to a navigation apparatus for, when a path utilizing a ride on a transportation vehicle which is operated along a predetermined service route is designated for a trip between a starting location and a destination location, providing route guidance toward the destination location to enable a ride on the transportation vehicle, wherein the navigation apparatus comprises: an input section to which an instruction from a user is inputted; a position detection section for detecting a current position; a map data storage section for previously storing map information; a route selection section for selecting a route to the destination location including the service route of the transportation vehicle on which the user is to take a ride, based on the instruction inputted via the input section, the current position detected by the position detection section, and the map information stored in the map data storage section; a route guidance section for generating route guidance information for the route guidance based on the route selected by the route selection section, the current position detected by the position detection section, and the map information stored in the map data storage section; a communication section for receiving communication information transmitted from a base station which is disposed in association with a boarding point for the transportation vehicle, the communication information comprising information concerning the boarding point; a caution generation section for generating caution information based on which to provide a caution for the user when the boarding point is determined as incorrect during the route guidance by the route guidance section based on the information concerning the boarding point received by the communication section; and an output section for providing a caution for the user based on the caution information inputted from the caution generation section.

Thus, according to the first aspect, if a user heading for a destination location arrives at the wrong platform or bus terminal, the user is precautioned before taking a ride on a train or a bus heading for the wrong destination.

It might seem possible to determine the properness of a boarding point by detecting a current position by GPS (Global Positioning System) . However, in the case where a boarding point for a transportation vehicle (e.g., a train station platform) is located underground or within a building structure, it may be impossible to detect a current position by GPS. Moreover, it is often the case that a number of boarding points are located in close proximity, as in the case of the platforms of a train station. The GPS precision may not be high enough for a number of boarding points which are huddled in such close proximity to enable accurate current position detection, so that it may be impossible to accurately determine the boarding point at which the user is situated. In contrast, according to the first aspect of the present invention, the properness of a boarding point is determined based on information concerning the boarding point received by the communication section As a result, the aforementioned problem associated with GPS-based technique is eliminated, and it becomes possible to make an accurate properness determination for a boarding point.

According to a second aspect of the present invention based on the first aspect, the communication information comprises position information concerning the boarding point, and, when the boarding point is determined as incorrect, the route selection section selects a new route including a route to a correct boarding point from the incorrect boarding point as a starting location, based on the instruction inputted from the input section, the map information stored in the map data storage section, and the position information received by the communication section; the route guidance section generates new route guidance information based on the new route selected by the route selection section, the map information stored in the map data storage section, and the position information received by the communication section; and the output section provides the caution, and provides route guidance based on the route guidance information newly generated by the route guidance section.

Thus, according to the second aspect, the navigation apparatus receives position information from a base station. Therefore, it is possible to obtain current position information even in the case where a GPS-based acquisition of position information might be difficult. Once the current position information is obtained, the navigation apparatus can perform route selection. Thus, the navigation apparatus can precaution a user before taking a ride on a train or a bus heading for the wrong destination, and present to the user various kinds of communication information which can help the user take a train or a bus heading for the right destination or are otherwise helpful.

According to a third aspect of the present invention based on the first aspect, the communication information comprises position information concerning the boarding point, and the route guidance section refers to the position information received by the communication section, and determines the boarding point as incorrect if the position information indicates deviation from the selected route.

Thus, according to the third aspect, the route guidance section can accurately determine whether the user has deviated from the route by referring to the accurate position information of a base station contained in the communication information which is received by the communication section. As a result, it becomes possible to easily determine whether a boarding point is correct or not based on the degree of deviation from the route.

According to a fourth aspect of the present invention based on the first aspect, the communication information comprises identification information of the boarding point, and the route guidance section determines the boarding point as incorrect if the boarding point indicated by the identification information received by the communication section is not a boarding point on the selected route.

Thus, according to the fourth aspect, even if the position detection section cannot obtain current position information, or if the accuracy of the obtained current position information is not high enough, it is still possible to accurately determine whether a boarding point is correct or not by utilizing the accurate position information of the base station contained in the communication information.

According to a fifth aspect of the present invention based on the first aspect, the communication information comprises information concerning a service route of a transportation vehicle pulling into and out of the boarding point, and the route guidance section determines the boarding point as incorrect if the service route indicated by the information concerning the service route received by the communication section deviates from the selected route.

Thus, according to the fifth aspect, the properness of a boarding point is determined by referring to, for example, information as to which scheduled direction the trains pulling into and out of a given platform are associated with. As a result, even if the navigation apparatus fails to obtain the current position information to be detected by the position detection section or the position information contained in the communication information, or if the accuracy of the obtained information is not high enough, it is still possible to accurately determine whether a boarding point is correct or not.

According to a sixth aspect of the present invention based on the first aspect, the communication information comprises information concerning the transportation vehicle, and, if the boarding point is determined as incorrect, the output section provides the caution, and outputs the information concerning the transportation vehicle received by the communication section.

Thus, according to the sixth aspect, in the case where the transportation vehicle is a train, for example, various kinds of communication information which can help the user take a train or a bus heading for the right destination location, e.g., the scheduled destination, type (classifications such as express, local, etc.), time of departure and/or arrival, delay/accident information, of a next incoming train, or are otherwise helpful, can be presented to the user.

According to a seventh aspect of the present invention based on the first aspect, the communication information comprises identification information of the boarding point, and, if the boarding point is determined as incorrect, the output section provides the caution, and outputs the identification information of the boarding point received by the communication section.

Thus, according to the seventh aspect, in the case where the transportation vehicle is a train, for example, information concerning a place at which to ride on a train (e.g., a platform) can be presented to the user, e.g., which platform is associated with which service line, and/or which scheduled direction the trains pulling into and out of a given platform are associated with.

According to an eighth aspect of the present invention based on the first aspect, the communication information comprises information concerning time of departure and/or arrival of the transportation vehicle, and the route guidance section comprises a remaining time calculation section for calculating, if the boarding point is determined as incorrect, remaining time till a departure time of the transportation vehicle on which the user is to take a ride, based on the information concerning time of departure and/or arrival received by the communication section, and, if the boarding point is determined as incorrect, the output section provides the caution, and outputs the remaining time calculated by the remaining time calculation section.

Thus, according to the eighth aspect, the remaining time till a departure time of the transportation vehicle on which the user is to take a ride, as well as improperness of a boarding point, can be presented to the user.

According to a ninth aspect of the present invention based on the first aspect, the communication information comprises position information corresponding to a height of a level on which the base station is located within a structure; and the map information comprises map data corresponding to the height of the level.

Thus, according to the ninth aspect, in a structure (e.g., a train station) having multiple floors or levels, the displayed maps corresponding to different levels can be switched depending on the received position information. As a result, accurate and comprehensible route guidance can be presented to a user who moves between different levels

According to a tenth aspect of the present invention based on the first aspect, the output section employs at least one of a sound and a vibration to present to the user the caution information inputted from the caution generation section.

Thus, according to the tenth aspect, by generating an alarm sound (by means of an internal loudspeaker or the like) or activating a vibrator, the user can be reminded of the improperness of a boarding point even when the user is not paying particular attention to the route guidance.

An eleventh aspect of the present invention is directed to a navigation system comprising: a navigation apparatus for, when a path utilizing a ride on a transportation vehicle which is operated along a predetermined service route is designated for a trip between a starting location and a destination location, providing route guidance toward the destination location to enable a ride on the transportation vehicle; and a base station which is disposed in association with a boarding point for the transportation vehicle, wherein the base station transmits communication information comprising information concerning the boarding point to the navigation apparatus, wherein the navigation apparatus comprises: an input section to which an instruction from a user is inputted; a position detection section for detecting a current position; a map data storage section for previously storing map information; a route selection section for selecting a route to the destination location including the service route of the transportation vehicle on which the user is to take a ride, based on the instruction inputted via the input section, the current position detected by the position detection section, and the map information stored in the map data storage section; a route guidance section for generating route guidance information for the route guidance based on the route selected by the route selection section, the current position detected by the position detection section, and the map information stored in the map data storage section; a communication section for receiving the communication information transmitted from the base station; a caution generation section for generating caution information based on which to provide a caution for the user when the boarding point is determined as incorrect during the route guidance by the route guidance section based on the information concerning the boarding point received by the communication section; and an output section for providing a caution for the user based on the caution information inputted from the caution generation section.

According to a twelfth aspect of the present invention based on the eleventh aspect, the navigation system comprises a plurality of said base stations disposed in association with different boarding points, wherein coverage areas of the plurality of base stations do not overlap one another.

Thus, according to the twelfth aspect, the navigation apparatus can more accurately make the properness determination for a boarding point because it does not receive radiowaves from base stations which are disposed in association with different boarding points.

A thirteenth aspect of the present invention is directed to a navigation method for, when a path utilizing a ride on a transportation vehicle which is operated along a predetermined service route is designated for a trip between a starting location and a destination location, providing route guidance toward the destination location to enable a ride on the transportation vehicle, wherein the navigation method comprises: an input step of inputting an instruction from a user; a position detection step of detecting a current position; a route selection step of selecting a route to the destination location including the service route of the transportation vehicle on which the user is to take a ride, based on the instruction inputted by the input step, the current position detected by the position detection step, and previously-provided map information; a route guidance step of generating route guidance information for the route guidance based on the route selected by the route selection step, the current position detected by the position detection step, and the map information; a communication step of receiving communication information transmitted from a base station which is disposed in association with a boarding point for the transportation vehicle, the communication information comprising information concerning the boarding point; a caution generation step of generating caution information based on which to provide a caution for the user when the boarding point is determined as incorrect during the route guidance by the route guidance step based on the information concerning the boarding point received by the communication step; and an output step of providing a caution for the user based on the caution information generated by the caution generation step.

According to a fourteenth aspect of the present invention based on the thirteenth aspect, the communication information comprises position information concerning the boarding point, and, when the boarding point is determined as incorrect, the route selection step selects a new route including a route to a correct boarding point from the incorrect boarding point as a starting location, based on the instruction inputted by the input step, the map information, and the position information received by the communication step; the route guidance step generates new route guidance information based on the new route selected by the route selection step, the map information, and the position information received by the communication step; and the output step provides the caution, and provides route guidance based on the route guidance information newly generated by the route guidance step.

According to a fifteenth aspect of the present invention based on the thirteenth aspect, the communication information comprises position information concerning the boarding point, and the route guidance step refers to the position information received by the communication step, and determines the boarding point as incorrect if the position information indicates deviation from the selected route.

According to a sixteenth aspect of the present invention based on the thirteenth aspect, the communication information comprises identification information of the boarding point, and the route guidance step determines the boarding point as incorrect if the boarding point indicated by the identification information received by the communication step is not a boarding point on the selected route.

According to a seventeenth aspect of the present invention based on the thirteenth aspect, the communication information comprises information concerning a service route of a transportation vehicle pulling into and out of the boarding point, and the route guidance step determines the boarding point as incorrect if the service route indicated by the information concerning the service route received by the communication step deviates from the selected route.

According to an eighteenth aspect of the present invention based on the thirteenth aspect, the output step employs at least one of a sound and a vibration to present to the user the caution information generated by the caution generation step.

A nineteenth aspect of the present invention is directed to a computer readable recording medium having recorded thereon a program for causing a navigation apparatus to execute a process for, when a path utilizing a ride on a transportation vehicle which is operated along a predetermined service route is designated for a trip between a starting location and a destination location, providing route guidance toward the destination location to enable a ride on the transportation vehicle, wherein the process comprises: an input step of inputting an instruction from a user; a position detection step of detecting a current position; a route selection step of selecting a route to the destination location including the service route of the transportation vehicle on which the user is to take a ride, based on the instruction inputted by the input step, the current position detected by the position detection step, and previously-provided map information; a route guidance step of generating route guidance information for the route guidance based on the route selected by the route selection step, the current position detected by the position detection step, and the map information; a communication step of receiving communication information transmitted from a base station which is disposed in association with a boarding point for the transportation vehicle, the communication information comprising information concerning the boarding point; a caution generation step of generating caution information based on which to provide a caution for the user when the boarding point is determined as incorrect during the route guidance by the route guidance step based on the information concerning the boarding point received by the communication step; and an output step of providing a caution for the user based on the caution information generated by the caution generation step.

A twentieth aspect of the present invention is directed to a program for causing a navigation apparatus to execute a process for, when a path utilizing a ride on a transportation vehicle which is operated along a predetermined service route is designated for a trip between a starting location and a destination location, providing route guidance toward the destination location to enable a ride on the transportation vehicle, wherein the process comprises: an input step of inputting an instruction from a user; a position detection step of detecting a current position; a route selection step of selecting a route to the destination location including the service route of the transportation vehicle on which the user is to take a ride, based on the instruction inputted by the input step, the current position detected by the position detection step, and previously-provided map information; a route guidance step of generating route guidance information for the route guidance based on the route selected by the route selection step, the current position detected by the position detection step, and the map information; a communication step of receiving communication information transmitted from a base station which is disposed in association with a boarding point for the transportation vehicle, the communication information comprising information concerning the boarding point; a caution generation step of generating caution information based on which to provide a caution for the user when the boarding point is determined as incorrect during the route guidance by the route guidance step based on the information concerning the boarding point received by the communication step; and an output step of providing a caution for the user based on the caution information generated by the caution generation step.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the structure of a navigation apparatus according to an embodiment of the present invention;
FIG. 2 is a block diagram illustrating a navigation apparatus according to an embodiment of the present invention as implemented in a standard computer system;
FIG. 3 is a flowchart illustrating a basic flow of processing performed by a navigation apparatus according to an embodiment of the present invention;
FIG. 4 is a schematic plan view illustrating platforms of a train station, where base stations are installed on the respective platforms; and
FIG. 5 is a schematic perspective view illustrating floors and platforms of a train station having a multi-level structure, where base stations are installed on the respective platforms.

### DESCRIPTION OF THE PREFERRED EMBODIMENTS

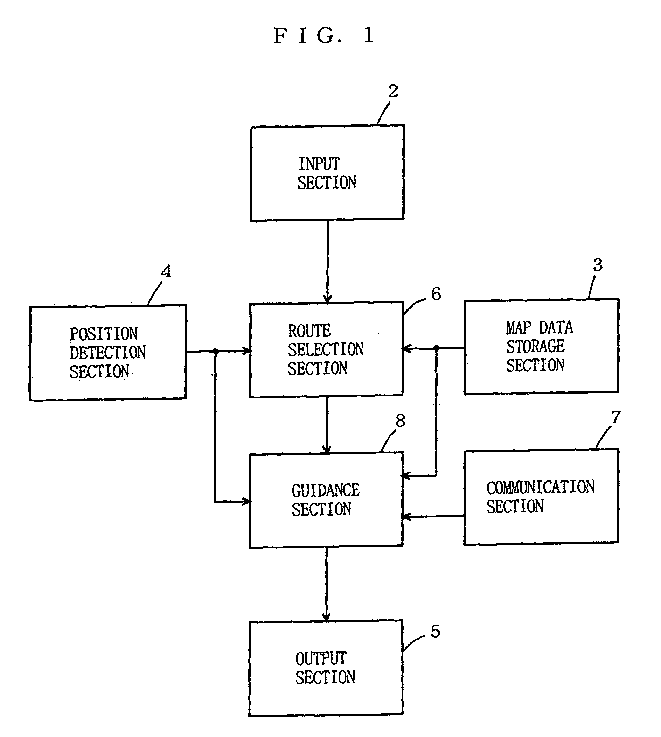

FIG. 1 is a block diagram illustrating the structure of a navigation apparatus according to an embodiment of the present invention. As shown in FIG. 1, the present navigation apparatus comprises an input section 2, a map data storage section 3, an output section 5, a position detection section 4, a route selection section 6, a communication section 7, and a guidance section 8.

The input section 2 may be composed of a remote control, a touch sensor, a keyboard, and/or a mouse, etc., which is controlled by a user. By operating the input section 2, a user can select from various functions of the navigation system (process change, map switching, level change) or set a point. Instruction information which is outputted from the input section 2 is inputted to the route selection section 6.

The communication section 7 receives various kinds of information, including position information which is transmitted from a base station which is installed in a train station or on a platform thereof, etc. Typically, the communication section 7 communicates with a base station via communication lines employed for mobile phones or PHS (Personal Handyphone System). Various kinds of information which have been received are inputted to the guidance section 8. The locational arrangement of base stations and the like will be described later.

The position detection section 4, which may be composed of a GPS (Global Positioning System) device, a radiowave beacon receiver, a velocity sensor, an angular velocity sensor, an absolute orientation sensor, and/or the like, detects a current position of a user. The position detection section 4 outputs current position information concerning the current position of the user, which is inputted to the route selection section 6 and the guidance section 8. In the case where externally-provided current position information concerning the current position of the user is received by the communication section 7, the position detection section 4 may be internalized in the communication section 7 as a function thereof. Furthermore, in the case where externally-provided position information is received by the communication section 7 and a current position is calculated based on a radio field intensity measurement, for example, the functionality of the position detection section 4 may be realized in conjunction with the functionality of the communication section 7.

The map data storage section 3 may be composed of an optical disk (such as a CD or a DVD), a hard disk, or a semiconductor memory card such as an SD (Secure Digital) card. Two-dimensional map data and/or three-dimensional map data concerning general topography, intersections, coordinates, topology, attributes, regulation information, and junctions concerning roads and streets, platforms, bus terminals, etc., are recorded in the map data storage section 3. The map data which is recorded in the map data storage section 3 is read and utilized by the route selection section 6 and the guidance section 8 as necessary. In the case where the aforementioned map data can be externally obtained via the communication section 7, the map data storage section 3 may be omitted, or alternatively function as a temporary storage.

In accordance with instructions represented by the instruction information which is inputted via the input section 2, the route selection section 6 reads map data of a required area from the map data storage section 3. Based on the instruction information (such as point information) which is inputted from the input section 2 and the current position information concerning the current position of the user which is inputted from the position detection section 4 or the communication section 7, the route selection section 6 determines a starting location and a destination location, and searches for a least cost route from the starting location to the destination location. As a result, the route selection section 6 outputs route information, which is inputted to the guidance section 8.

Based on the route information which is inputted from the route selection section 6, the position information which is inputted from the position detection section 4 or the communication section 7, and the map data which is inputted from the map data storage section 3, the guidance section 8 generates a map image of the neighborhood of the current location to provide route guidance toward the destination location. The route guidance is inputted to the output section 5. Such functionality of the guidance section 8 may be realized by an independent component, which may be termed a "route guidance section". Again, the route guidance section under this definition may be a component part of the guidance section 8.

In addition, upon detecting a deviation of the current position from the supposed route, the guidance section 8 generates caution information for cautioning the user, e.g., information for instructing the output section 5 to generate a buzzer sound or vibration as a form of cautioning. The caution information is also inputted to the output section 5. Such functionality of the guidance section 8 may be realized by an independent component, which may be termed a "caution generation section". Again, the caution generation section under this definition may be a component part of the guidance section 8.

The output section 5, which may include a display device , such as a liquid crystal display or a CRT (Cathode Ray Tube) display, a loudspeaker, a vibrator, and/or the like, displays the route guidance including a map image generated by the guidance section 8. In addition or in the alternative, the output section 5 may provide the guidance in the form of sounds. Furthermore, based on the caution information from the guidance section 8, the output section 5 generates a buzzer sound or vibration, etc., to provide cautions for the user as necessary.

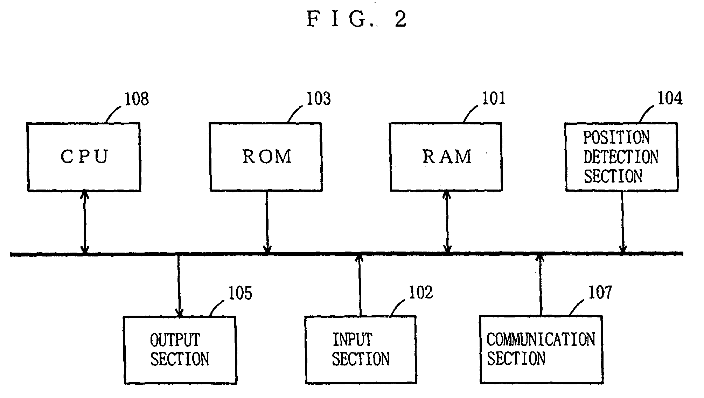

The navigation apparatus structure as described with reference to FIG. 1 above can be implemented by employing a standard computer system. FIG. 2 is a block diagram illustrating the navigation apparatus shown in FIG. 1 as implemented in a standard computer system.

As shown in FIG. 2, the navigation apparatus comprises a CPU 108, a ROM 103, a RAM 101, an input section 102, a position detection section 104, an output section 105, and a communication section 107, which are interconnected via a common bus or an external bus. The RAM 101 and the ROM 103 may each comprise a storage device which utilizes an external storage medium.

The CPU 108 in the navigation apparatus shown in FIG. 2 operates based on programs which are stored in the RAM 101 and/or the ROM 103. Thus, the functionality of the route selection section 6 and the guidance section 8 shown in FIG. 1 are realized by corresponding programs. As such, the navigation apparatus typically utilizes a storage medium for storing programs for realizing such software control. Alternatively, the navigation apparatus may operate based on programs which are transmitted via communication lines.

Furthermore, the map data storage section 3 shown in FIG. 1 is typically embodied within the ROM 103. Notwithstanding, the whole or part of the map data storage section 3 may be embodied within the RAM 101.

Alternatively, the navigation apparatus structure shown in FIG. 1 may be implemented in a mobile phone or PHS. In that case, some of the functions of the above-described component elements may be realized by a navigation server or the like which is external to the apparatus. A navigation apparatus having such a structure may exchange information with the server by means of the communication section 7 in order to provide route guidance to a user.

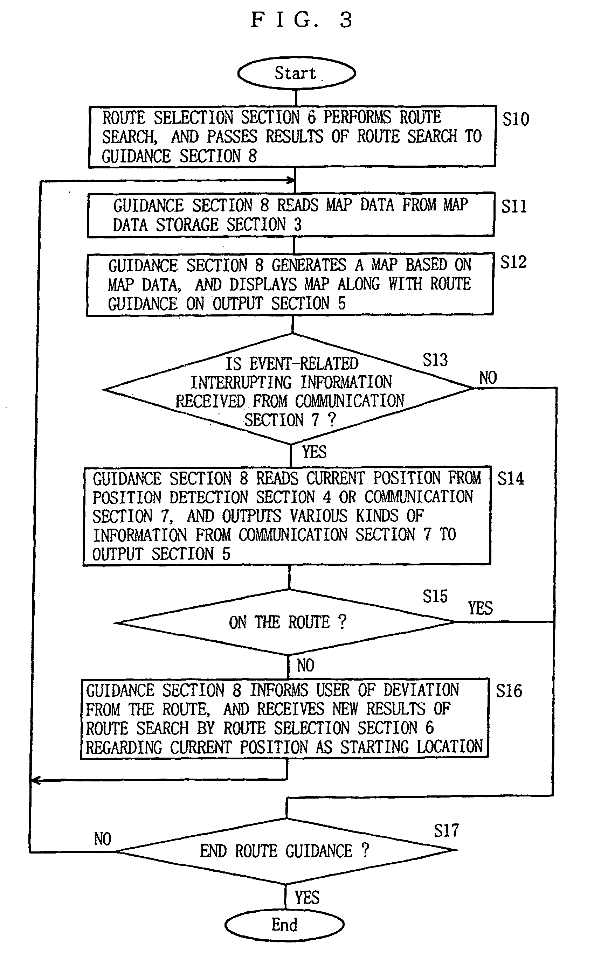

Next, the fundamental operation of the navigation apparatus will be described with reference to FIG. 3. FIG. 3 is a flowchart illustrating a basic flow of processing performed by a navigation apparatus according to an embodiment of the present invention.

At step S10 shown in FIG. 3, the route selection section 6 receives a destination location and a map area of interest as designated by the user via the input section 2 as well as a current position as detected by the position detection section 4 to perform a route search, and passes results of the route search to the guidance section 8. As an example, the following flow assumes that a path utilizing a ride on a transportation vehicle is included within the route that has been ascertained as a result of the route search, so that the user is expected to take a train ride along the service route.

At step S11, the guidance section 8 reads map data from the map data storage section 3. The map data which is read at this step is data based on which a two-dimensional or three-dimensional map image is to be displayed.

At step S12, the guidance section 8 generates a map based on the map data which was read at step 11, and displays the map along with route guidance on the output section 5. The scale of the displayed map may be set by the user or automatically set. For example, a relatively large map encompassing the vicinity of a train station may be displayed until arriving at the train station, and once the user arrives at the train station, the map may be enlarged so as to be replaced by a more detailed map covering the platform arrangement at the train station and the like.

Next, at step S13, the guidance section 8 determines whether or not the communication section 7 has received event-related interrupting information (described later). If any event-related interrupting information has been received, the process proceeds to step S14. If not, the process jumps to step S17.

As used herein, the "event-related interrupting information" is defined as information which is transmitted from a base station, which may be provided on a platform at a train station or the like, to the navigation apparatus according to the present invention. For example, the event-related interrupting information may encompass various kinds of information which can help a user take a train that transports the user to the correct destination location, e.g., information concerning platforms, or are otherwise helpful. Examples of information which is otherwise helpful include tourist-oriented information, e.g., where scenic cherry blossoms may be in bloom or snowing information on skifields, and/or information on various leisure or entertainment events.

Examples of information concerning platforms may encompass the specific service line to which a given platform is assigned, and/or the scheduled direction associated with a train which pulls into or out of a given platform. Furthermore, still images or moving images taken by a camera which is installed above a given platform showing incoming or leaving trains may be included. The information concerning platforms may also encompass train-related information, e.g., the scheduled destination, type (classifications such as express, local, etc.), time of departure and/or arrival, delay/accident information, of a next incoming train.

Although trains are mentioned above, it will be appreciated that any type of transportation vehicles, e.g., buses, ferryboats, airplanes, which are operated along predetermined routes, is applicable to the present invention. For example, the event-related interrupting information may encompass information concerning bus terminals or bus-related information, instead of information concerning platforms. Examples of bus-related information may include whether a given bus is fully occupied or hot, and/or whether the bus is being caught in a traffic jam or not.

Furthermore, the information concerning platforms may encompass any position information concerning the positions of base stations and/or platforms, e.g., position coordinates of base stations and/or platforms or identification codes (which are uniquely assigned to base stations) used to calculate positions therefrom.

Typically, such base stations are base stations for mobile phones or PHS. Thus, the base stations can relatively easily inform the navigation apparatus of their respective positions.

The position information may be information which is provided from a position registration center which manages the positions of respective mobile phones in response to inquiries made by the navigation apparatus according to the present invention, or obtained by applying predetermined calculations thereto, or may be precursory information therefor. Alternatively, the position information may be information which is used for a triangulation-based method which carries out position calculations based on the measurements of radio field intensity levels from a plurality of base stations.

Furthermore, two kinds of base stations may be utilized, which may be termed "information-providing base stations" and "base stations for deriving position information". In such cases, only one information-providing base station may be installed within a train station to transmit various aforementioned information other than the position information therefrom. A information-providing base station may also be provided in each train to transmit various information concerning the train therefrom.

On the other hand, base stations for deriving position information may be provided on platforms or the like to transmit only position information therefrom. As such base stations for deriving position information, any type of base stations which are capable of providing position information to users may be used, e.g., base stations for mobile phones or PHS, specially-designed position markers, or radiowave beacons.

In accordance with the aforementioned base station configuration, the event-related interrupting information may either contain: only the position information; or position information plus various kinds of information other than the position information. However, the present embodiment conveniently assumes that each base station transmits various kinds of information including position information, so that the event-related interrupting information contains both position information and the aforementioned various kinds of information.

Next, at step S14, the guidance section 8 reads the current position information inputted from the position detection section 4. However, in the case where GPS-based position detection is adopted, for example, it may not be possible to obtain current position information from the position detection section 4 in places outside the GPS radiowave coverage, e.g., underground areas or areas inside buildings. Even if current position information is successfully obtained, its accuracy may no be high enough. However, as described above, the event-related interrupting information which is received by the communication section 7 contains position information concerning base stations and/or platforms. Therefore, this position information may be read by the guidance section 8 as the current position information in the case where it is impossible to obtain accurate-enough current position information. Furthermore, the guidance section 8 may be arranged so that, whenever the position information contained in the event-related interrupting information is received, the guidance section 8 reads this position information as the current position information.

Thereafter, the guidance section 8 causes the aforementioned various kinds of information concerning platforms and/or trains, contained in the event-related interrupting information obtained from the communication section 7, to be displayed on the output section 5. Instead of graphical representation, the guidance section 8 may present information in the form of sounds. Moreover, information which has been subjected to predetermined computations and/or interpretation may be presented, e.g., the number of minutes in which a given train is expected to arrive, as may be calculated by comparing the known time of departure and/or arrival against the current time. Furthermore, time table information stored in a time table information storage section (not shown) may be utilized to provide guidance. Specifically, the guidance section 8 may calculate a departure time of a train which the user is supposed to take, based on the time table information and information concerning the train to be taken by the user (assuming that the information concerning the train to be taken by the user is known from a preselected route and information concerning platforms). Then, based on the calculated departure time and the current time, the guidance section 8 may calculate the number of minutes in which the train of interest is expected to arrive, and present that information. Note that the time table information may be received by the communication section 7 as part of the event-related interrupting information when a user enters the train station, or previously stored in a time table information storage section (not shown).

Next, at step S15, the guidance section 8 refers to the current position information obtained from the position detection section 4 or the communication section 7 to check whether the current position is substantially on the route of interest or not. If the current position is found to be substantially on the route of interest, the process jumps to step S17. If not, the process proceeds to step S16.

The guidance section 8 may refer to the information contained in the event-related interrupting information from the communication section 7, e.g., information concerning the scheduled direction associated with a train which pulls into or out of a given platform, to determine whether or not using a train associated with that platform is in consistency with the supposed route to the destination location. In other words, the guidance section 8 checks the service route of trains pulling into and out of the platform, as indicated by the information contained in the event-related interrupting information received by the communication section 7, against the supposed route to the destination location. If the check result indicates that the service route of trains pulling into and out of the platform is not in consistency with the supposed route, it is determined that the platform is incorrect because it would be impossible to arrive at the destination location by using a train associated with that particular platform. Thus, the user's deviation from the supposed route can be determined.

The event-related interrupting information which is used for the determination as to whether a platform is correct or not is not limited to the position information of the platform and the service routes of trains pulling into and out of the platform. Any other type of information which contains platform-specific information may be used for the determination as to whether a platform is correct or not. For example, the guidance section 8 may refer to identification information of platforms, e.g., platform numbers (service line numbers) to determine whether or not using a train associated with the platform is in consistency with the supposed route to the destination location. In this case, the guidance section 8 will need a correspondence table which associates platform numbers with the information concerning service routes of trains pulling into and out of platforms. Thus, the guidance section 8 can refer to such a table to ascertain the service routes of trains pulling into and out of a particular platform, based on a platform number received by the communication section 7. By checking the ascertained service route against the supposed route to the destination location, the guidance section 8 can determine whether that particular platform is correct or not. In this case, the table may be previously stored in the navigation apparatus, or obtained via the communication section 7 which receives the table from an external source.

As information concerning service routes, position information of train stations at which trains make stops may be used. In other words, the determination as to whether a given platform is correct or not may be made based on whether or not the positions of train stations at which trains make stops are on the supposed route to the destination location. Alternatively, the guidance section 8 may make the determination as to whether a given platform is correct or not based on information other than the service routes of trains, e.g., scheduled destinations of trains. In this case, a platform may be determined as incorrect if the direction from a current position (or the position of a train station at which a user is situated) to a scheduled destination of a train runs in the opposite direction of the destination location.

Thus, in the case where the properness of a platform is determined without relying on the current position, i.e., in the case where the determination is made based on identification information of platforms or information concerning service routes, the navigation apparatus does not need to detect a specific current position within a train station. Therefore, in this case, the navigation apparatus does not need to store any detailed map data of the inside of a train station to determine the properness of a platform.

Next, at step S16, the guidance section 8 generates caution information to let the user know of a deviation from the supposed route, and outputs the generated caution information to the output section 5. In accordance with the caution information, the output section 5 displays a caution on a display screen. Preferably, the output section 8 causes an internal loudspeaker to generate an alarm sound or activates a vibrator. Thus, the caution for a user can be given in a form which forces the user to recognize the deviation from the supposed route even when the user is not paying particular attention to the route guidance. Furthermore, the guidance section 8 asks the route selection section 6 to again search for routes beginning from the current position or the position of the incorrect current platform, and receives new results of the route search including a route to the correct platform. Thereafter, the process returns to step S11 to continue to provide route guidance. Note that, through the newly-performed route search, the route selection section 6 may select only the routes from the current position (or the incorrect platform) to a correct platform, or select any possible routes from the current position to the destination location all over again.

Lastly, at step S17, the guidance section 8 determines whether or not to end the route guidance, based on whether the user has reached the destination location or not, for example. If the route guidance is to be ended, all the processing is terminated. If the route guidance is not to be ended yet, the process returns to step S11 to continue to provide route guidance.

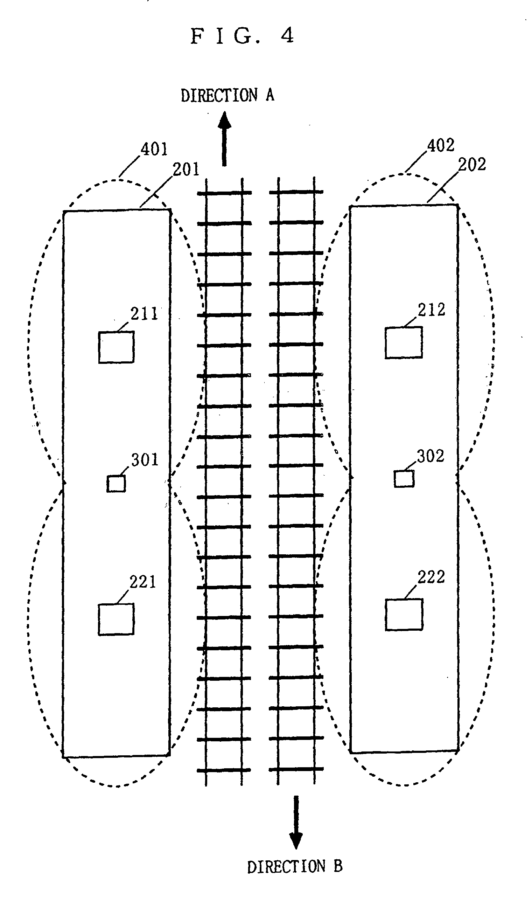

Next, a specific manner in which the navigation apparatus according to the present invention may be used at a train station will be described. FIG. 4 is a schematic plan view illustrating platforms of a train station, where base stations are installed on the respective platforms. As shown in FIG. 4, the train station includes first and second platforms 201 and 202. On each platform, first to fourth exits 211, 221, 212, and 222 which are in communication with one another via an underlying floor (not shown), for example, and first and second base stations 301 and 302 are provided. The first and second base stations 301 and 302 each comprise a directional antenna. In FIG. 4, effective coverage areas 401 and 402 of radiowaves from the first and second base stations 301 and 302, respectively, are indicated by dotted lines representing the directivity characteristics of the respective directional antennas.

In the case where the base stations are base stations for mobile phones, the coverage areas 401 and 402 may be designed so as to constitute smallest cell units known as microcells or picocells. As a result, systems employed for existing mobile phones can be utilized in connection with the present invention.

The coverage areas 401 and 402 do not need to be set so as to correspond to the directivity characteristics of the respective directional antennas. Instead, a plurality of base stations (e.g., position markers) may together create one coverage area. In that case, it is still preferable to set the coverage areas 401 and 402 so as not to overlap each other by, for example, adjusting the radio field intensity of each base station. However, in installations where base stations corresponding to different areas can somehow be identified, as is the case with the base stations for CDMA mobile phones or PHS (under which cells are intentionally arranged so as to create overlapping coverage areas), the coverage areas 401 and 402 may overlap. The base stations are preferably disposed so that every boarding point is encompassed within a coverage area.

For the sake of illustration, it is assumed that trains heading in direction A will pull into and out of the first platform 201, and that trains heading in direction B will pull into and out of the second platform 202 in FIG. 4. It is further assumed that a user, who wants to travel in direction A, erroneously comes through the fourth exit 222 to reach the second platform 202. In this case, the navigation apparatus according to the present invention will receive event-related interrupting information from the second base station 302. As seen from FIG. 4, since the coverage area 401 of the first base station 301 and the coverage area 402 of the second base station 302 do not overlap each other, the navigation apparatus can surely determine the current position or the corresponding platform by referring to the received event-related interrupting information. Again, in installations where base stations corresponding to different areas can somehow be identified, the coverage areas may overlap, as mentioned above.

Next, the navigation apparatus determines that the current position is at the wrong platform, and therefore is not on the supposed route (step S15 described above). As described above, this determination by the navigation apparatus may be made based on the position information contained in the event-related interrupting information or the current position information detected by the position detection section 4. Alternatively, the navigation apparatus may refer to information concerning the second platform 202 contained in the event-related interrupting information (e.g., the information that trains heading in direction B will pull into and out of the second platform 202) to determine that the information is not in consistency with the supposed route which involves taking a train in direction A, for example.

Next, the navigation apparatus generates an alarm sound or vibration to inform the user of a deviation from the supposed route, and searches for a route from the current position, i.e., the fourth exit 222, to the first or second exit 211 or 221 on the first platform 201 (step S16 described above), thereby introducing new route guidance.

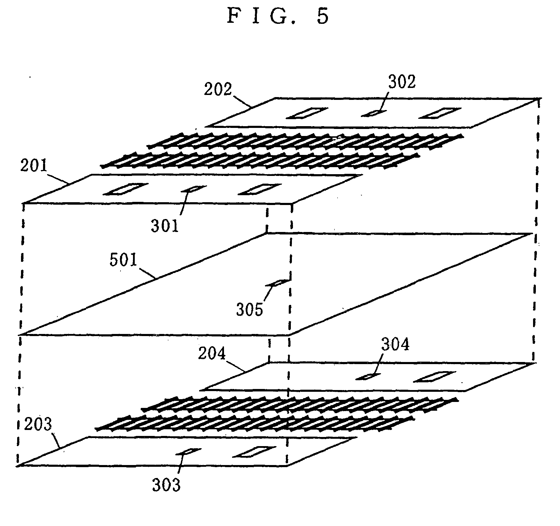

The example illustrated in FIG. 4 is directed to the case where generally two-dimensional route guidance is given on a plane which contains the first and second platforms 201 and 202. However, the route guidance is not limited to such two-dimensional guidance, but may be provided in a three-dimensional fashion. Hereinafter, such an example will be described with reference to FIG. 5.

FIG. 5 is a schematic perspective view illustrating floors and platforms of a train station having a multi-level structure, where base stations are installed on the respective platforms. The train station shown in FIG. 5 has three levels: a third floor containing first and second platforms 201 and 202; a second floor 501; and a first floor containing third and fourth platforms 203 and 204. Thus, the third floor in FIG. 5 corresponds to the one floor shown in FIG. 4. Third and fourth base stations 303 and 304 are provided on the first floor in a manner similar to FIG. 4. A fifth base station 305 is provided on the second floor 501, which contains no platforms.

If the current position of the user is on the second platform 202, the navigation apparatus according to the present invention receives event-related interrupting information from the second base station 302, and displays a map of the third floor corresponding to the position information, thereby providing route guidance. Typically, the position information would include a level number corresponding to the level shown in the map. However, the position information is not limited to the level number, but may be any information which e.g., a Z coordinate or altitude, which enables identification of the height of the level.

Next, if the user goes down to the second floor 501, the navigation apparatus receives event-related interrupting information from the fifth base station 305, and displays a map of the second floor 501 corresponding to the level number contained in the position information, thereby providing route guidance. A similar operation takes place if the user goes down to the first floor 501.

Thus, in a train station having multiple levels, the navigation apparatus can provide route guidance which is comprehensible to the user by switching the displayed map corresponding to the different levels in the train station. Alternatively, the navigation apparatus may provide route guidance by displaying a multi-level structure or three-dimensional map as shown in FIG. 5, instead of switching between maps corresponding to the different levels in the train station.

Although the above illustration of the navigation apparatus according to the present embodiment is directed to the case where the navigation apparatus is carried by a user who takes a train ride, the present invention is applicable to any transportation vehicle which transports a user. Alternatively, instead of being directly borne by a user, the navigation apparatus according to the present invention may be mounted in an automobile and carried into another transportation vehicle (e.g., a ferryboat) together with the automobile.

Furthermore, the navigation apparatus according to the present embodiment is not limited to applications which contemplate only one kind of transportation vehicle, but will similarly find use in applications where a plurality of kinds of transportation vehicles are available. For example, the prasent invention is applicable to a place which includes a plurality of bus stops, a train station where different train lines meet, a place which includes a bus stop situated in front of a train station, or a place where both an airport and a train station are located for passenger transition; among other possibilities.

## Claims

1. A navigation apparatus for, when a calculated path including a ride on a transportation vehicle which is operated along a predetermined service route is designated for a trip between a starting location and a destination location, providing route guidance toward the destination location to enable a ride on the transportation vehicle,
wherein the navigation apparatus comprises:
an input section (2) to which an instruction from a user is inputted;
a position detection section (4) for detecting a current position;
a map data storage section (3) for previously storing map information;
a route selection section (6) for selecting a route to the destination location including the service route of the transportation vehicle on which the user is to take a ride, based on the instruction inputted via the input section, the current position detected by the position detection section, and the map information stored in the map data storage section;
a route guidance section (8) for generating route guidance information for the route guidance based on the route selected by the route selection section, the current position detected by the position detection section, and the map information stored in the map data storage section;
a communication section (7) for receiving communication information transmitted from a base station which is disposed in association with a boarding point for the transportation vehicle, the communication information comprising information concerning the boarding point;
a caution generation section (8) for generating caution information based on which to provide a caution for the user when the boarding point is determined as incorrect during the route guidance by the route guidance section based on the information concerning the boarding point received by the communication section; and
an output section (5) for providing a caution for the user based on the caution information inputted from the caution generation section.

2. The navigation apparatus according to claim 1, wherein the communication information comprises position information concerning the boarding point, and
wherein, when the boarding point is determined as incorrect,
the route selection section selects a new route including a route to a correct boarding point from the incorrect boarding point as a starting location, based on the instruction inputted from the input section, the map information stored in the map data storage section, and the position information received by the communication section;
the route guidance section generates new route guidance information based on the new route selected by the route selection section, the map information stored in the map data storage section, and the position information received by the communication section; and
the output section provides the caution, and provides route guidance based on the route guidance information newly generated by the route guidance section.

3. The navigation apparatus according to claim 1, wherein the communication information comprises position information concerning the boarding point, and
wherein the route guidance section refers to the position information received by the communication section, and determines the boarding point as incorrect if the position information indicates deviation from the selected route.

4. The navigation apparatus according to claim 1, wherein the communication information comprises identification information of the boarding point, and
wherein the route guidance section determines the boarding point as incorrect if the boarding point indicated by the identification information received by the communication section is not a boarding point on the selected route.

5. The navigation apparatus according to claim 1, wherein the communication information comprises information concerning a service route of a transportation vehicle pulling into and out of the boarding point, and
wherein the route guidance section determines the boarding point as incorrect if the service route indicated by the information concerning the service route received by the communication section deviates from the selected route

6. The navigation apparatus according to claim 1, wherein the communication information comprises information concerning the transportation vehicle, and
wherein, if the boarding point is determined as incorrect, the output section provides the caution, and outputs the information concerning the transportation vehicle received by the communication section.

7. The navigation apparatus according to claim 1, wherein the communication information comprises identification information of the boarding point, and
wherein, if the boarding point is determined as incorrect, the output section provides the caution, and outputs the identification information of the boarding point received by the communication section.

8. The navigation apparatus according to claim 1, wherein the communication information comprises information concerning time of departure and/or arrival of the transportation vehicle, and
the route guidance section comprises a remaining time calculation section for calculating, if the boarding point is determined as incorrect, remaining time till a departure time of the transportation vehicle on which the user is to take a ride, based on the information concerning time of departure and/or arrival received by the communication section, and
wherein, if the boarding point is determined as incorrect, the output section provides the caution, and outputs the remaining time calculated by the remaining time calculation section.

9. The navigation apparatus according to claim 1,
wherein the communication information comprises position information corresponding to a height of a level on which the base station is located within a structure; and
the map information comprises map data corresponding to the height of the level.

10. The navigation apparatus according to claim 1, wherein the output section employs at least one of a sound and a vibration to present to the user the caution information inputted from the caution generation section.

11. A navigation system comprising:
a navigation apparatus for, when a calculated path including a ride on a transportation vehicle which is operated along a predetermined service route is designated for a trip between a starting location and a destination location, providing route guidance toward the destination location to enable a ride on the transportation vehicle; and
a base station which is disposed in association with a boarding point for the transportation vehicle,
wherein the base station transmits communication information comprising information concerning the boarding point to the navigation apparatus,
wherein the navigation apparatus comprises:
an input section (2) to which an instruction from a user is inputted;
a position detection section (4) for detecting a current position;
a map data storage section (3) for previously storing map information;
a route selection section (6) for selecting a route to the destination location including the service route of the transportation vehicle on which the user is to take a ride, based on the instruction inputted via the input section, the current position detected by the position detection section, and the map information stored in the map data storage section;
a route guidance section (8) for generating route guidance information for the route guidance based on the route selected by the route selection section, the current position detected by the position detection section, and the map information stored in the map data storage section;
a communication section (7) for receiving the communication information transmitted from the base station;
a caution generation section (8) for generating caution information based on which to provide a caution for the user when the boarding point is determined as incorrect during the route guidance by the route guidance section based on the information concerning the boarding point received by the communication section; and
an output section (5) for providing a caution for the user based on the caution information inputted from the caution generation section.

12. The navigation system according to claim 11 comprising a plurality of said base stations disposed in association with different boarding points, wherein coverage areas of the plurality of base stations do not overlap one another.

13. A navigation method for, when a calculated path including a ride on a transportation vehicle which is operated along a predetermined service route is designated for a trip between a starting location and a destination location, providing route guidance toward the destination location to enable a ride on the transportation vehicle,
wherein the navigation method comprises:
an input step of inputting an instruction from a user;
a position detection step of detecting a current position;
a route selection step of selecting a route to the destination location including the service route of the transportation vehicle on which the user is to take a ride, based on the instruction inputted by the input step, the current position detected by the position detection step, and previously-provided map information;
a route guidance step of generating route guidance information for the route guidance based on the route selected by the route selection step, the current position detected by the position detection step, and the map information;
a communication step of receiving communication information transmitted from a base station which is disposed in association with a boarding point for the transportation vehicle, the communication information comprising information concerning the boarding point;
a caution generation step of generating caution information based on which to provide a caution for the user when the boarding point is determined as incorrect during the route guidance by the route guidance step based on the information concerning the boarding point received by the communication step; and
an output step of providing a caution for the user based on the caution information generated by the caution generation step.

14. The navigation method according to claim 13, wherein the communication information comprises position information concerning the boarding point, and
wherein, when the boarding point is determined as incorrect,
the route selection step selects a new route including a route to a correct boarding point from the incorrect boarding point as a starting location, based on the instruction inputted by the input step, the map information, and the position information received by the communication step;
the route guidance step generates new route guidance information based on the new route selected by the route selection step, the map information, and the position information received by the communication step; and
the output step provides the caution, and provides route guidance based on the route guidance information newly generated by the route guidance step.

15. The navigation method according to claim 13, wherein the communication information comprises position information concerning the boarding point, and
wherein the route guidance step refers to the position information received by the communication step, and determines the boarding point as incorrect if the position information indicates deviation from the selected route.

16. The navigation method according to claim 13, wherein the communication information comprises identification information of the boarding point, and
wherein the route guidance step determines the boarding point as incorrect if the boarding point indicated by the identification information received by the communication step is not a boarding point on the selected route.

17. The navigation method according to claim 13, wherein the communication information comprises information concerning a service route of a transportation vehicle pulling into and out of the boarding point, and
wherein the route guidance step determines the boarding point as incorrect if the service route indicated by the information concerning the service route received by the communication step deviates from the selected route.

18. The navigation method according to claim 13, wherein the output step employs at least one of a sound and a vibration to present to the user the caution information generated by the caution generation step.

19. A computer readable recording medium having recorded thereon a program for causing a navigation apparatus to execute a process for, when a calculated path including a ride on a transportation vehicle which is operated along a predetermined service route is designated for a trip between a starting location and a destination location, providing route guidance toward the destination location to enable a ride on the transportation vehicle,
wherein the process comprises:
an input step of inputting an instruction from a user;
a position detection step of detecting a current position;
a route selection step of selecting a route to the destination location including the service route of the transportation vehicle on which the user is to take a ride, based on the instruction inputted by the input step, the current position detected by the position detection step, and previously-provided map information;
a route guidance step of generating route guidance information for the route guidance based on the route selected by the route selection step, the current position detected by the position detection step, and the map information;
a communication step of receiving communication information transmitted from a base station which is disposed in association with a boarding point for the transportation vehicle, the communication information comprising information concerning the boarding point;
a caution generation step of generating caution information based on which to provide a caution for the user when the boarding point is determined as incorrect during the route guidance by the route guidance step based on the information concerning the boarding point received by the communication step; and
an output step of providing a caution for the user based on the caution information generated by the caution generation step.

20. A program for causing a navigation apparatus to execute a process for, when a calculated path including a ride on a transportation vehicle which is operated along a predetermined service route is designated for a trip between a starting location and a destination location, providing route guidance toward the destination location to enable a ride on the transportation vehicle,
wherein the process comprises:
an input step of inputting an instruction from a user;
a position detection step of detecting a current position;
a route selection step of selecting a route to the destination location including the service route of the transportation vehicle on which the user is to take a ride, based on the instruction inputted by the input step, the current position detected by the position detection step, and previously-provided map information;
a route guidance step of generating route guidance information for the route guidance based on the route selected by the route selection step, the current position detected by the position detection step, and the map information;
a communication step of receiving communication information transmitted from a base station which is disposed in association with a boarding point for the transportation vehicle, the communication information comprising information concerning the boarding point;
a caution generation step of generating caution information based on which to provide a caution for the user when the boarding point is determined as incorrect during the route guidance by the route guidance step based on the information concerning the boarding point received by the communication step; and
an output step of providing a caution for the user based on the caution information generated by the caution generation step.

## Patentansprüche

1. Navigationsapparat zum Bereitstellen einer Weg-Leitung zu einer Bestimmungsort-Position, um eine Fahrt mit einem Transport-Fahrzeug zu ermöglichen, wenn ein berechneter Weg, enthaltend eine Fahrt mit einem entlang eines vorgegebenen Dienstwegs betriebenen Transport-Fahrzeug, für eine Reise zwischen einer Start-Position und einer Bestimmungsort-Position bestimmt wird,
wobei der Navigationsapparat umfasst:
einen Eingabe-Abschnitt (2), in den eine Instruktion von einem Benutzer eingegeben wird;
einen Positionsermittlungs-Abschnitt (4) zum Ermitteln einer gegenwärtigen Position;
einen Kartendatenspeicher-Abschnitt (3) zum vorhergehenden Speichern einer Karten-Information;
einen Weg-Auswahl-Abschnitt (6) zum Auswählen eines Wegs zu der Bestimmungsort-Position, enthaltend den Dienstweg des Transport-Fahrzeugs, mit dem der Benutzer eine Fahrt ausführen soll, auf der Grundlage der über den Eingabe-Abschnitt eingegebenen Instruktion, der durch den Positionsermittlungs-Abschnitt ermittelten gegenwärtigen Position, und der im Kartendatenspeicher-Abschnitt gespeicherten Karten-Information;
einen Weg-Leitungs-Abschnitt (8) zum Erzeugen einer Weg-Leitungs-Information für die Weg-Leitung auf der Grundlage des durch den Weg-Auswahl-Abschnitt ausgewählten Wegs, der durch den Positionsermittlungs-Abschnitt ermittelten gegenwärtigen Position, und der im Kartendatenspeicher-Abschnitt gespeicherten Karten-Information;
einen Kommunikations-Abschnitt (7) zum Empfangen einer Kommunikations-Information, welche von einer mit einem Einstiegspunkt für das Transport-Fahrzeug verknüpften Basisstation übermittelt wird, wobei die Kommunikations-Information eine Information betreffend den Einstiegspunkt umfasst;
einen Warnungserzeugungs-Abschnitt (8) zum Erzeugen einer Warnungs-Information, auf deren Grundlage eine Warnung für den Benutzer bereitgestellt wird, wenn der Einstiegspunkt während der Weg-Leitung durch den Weg-Leitungs-Abschnitt als falsch bestimmt wird, auf der Grundlage der durch den Kommunikations-Abschnitt empfangenen Information betreffend den Einstigespunkt; und
einen Ausgabe-Abschnitt (5) zum Bereitstellen einer Warnung für den Benutzer auf der Grundlage der durch den Warnungserzeugungs-Abschnitt eingegebenen Warnungs-Information.

2. Navigationsapparat nach Anspruch 1, wobei die Kommunikations-Information eine Positions-Information betreffend den Einstiegspunkt umfasst, und
wobei, wenn der Einstiegspunkt als falsch bestimmt wird,
der Weg-Auswahl-Abschnitt einen neuen Weg auswählt, enthaltend einen Weg zu einem richtigen Einstiegspunkt vom falschen Einstiegspunkt als Ausgangspunkt, auf der Grundlage der durch den Eingabe-Abschnitt eingegebenen Instruktion, der im Kartendatenspeicher-Abschnitt gespeicherten Karten-Information, und der durch den Kommunikations-Abschnitt empfangenen Positions-Information;
der Weg-Leitungs-Abschnitt neue Weg-Leitungs-Information erzeugt, auf der Grundlage des durch den Weg-Auswahl-Abschnitt ausgewählten neuen Wegs, der im Kartendatenspeicher-Abschnitt gespeicherten Karten-Information, und der durch den Kommunikations-Abschnitt empfangenen Positions-Information; und
der Ausgabe-Abschnitt die Warnung bereitstellt, und auf der Grundlage der durch den Weg-Leitungs-Abschnitt neu erzeugten Weg-Leitungs-Information eine Weg-Leitung bereitstellt.

3. Navigationsapparat nach Anspruch 1, wobei die Kommunikations-Information eine Positions-Information betreffend den Einstiegspunkt umfasst, und
wobei der Weg-Leitungs-Abschnitt auf die durch den Kommunikations-Abschnitt empfangene Positions-Information Bezug nimmt, und den Einstiegspunkt als falsch bestimmt, wenn die Positions-Information eine Abweichung vom ausgewählten Weg anzeigt.

4. Navigationsapparat nach Anspruch 1, wobei die Kommunikations-Information eine Identifizierungs-Information über den Einstiegspunkt umfasst, und
wobei der Weg-Leitungs-Abschnitt den Einstiegspunkt als falsch bestimmt, falls der Einstiegspunkt, welcher durch die durch den Kommunikations-Abschnitt empfangene Identifizierungs-Information angezeigt wird, kein Einstiegspunkt auf dem ausgewählten Weg ist.

5. Navigationsapparat nach Anspruch 1, wobei die Kommunikations-Information eine Information betreffend einen Dienstweg eines Transport-Fahrzeugs umfasst, welches in den Einstiegspunkt einfährt oder daraus herausfährt, und
wobei der Weg-Leitungs-Abschnitt den Einstiegspunkt als falsch bestimmt, falls der Dienstweg, welcher durch die Information betreffend den durch den Kommunikations-Abschnitt empfangenen Dienstweg angezeigt wird, vom ausgewählten Weg abweicht.

6. Navigationsapparat nach Anspruch 1, wobei die Kommunikations-Information eine Information betreffend das Transport-Fahrzeug umfasst, und
wobei, falls der Einstiegspunkt als falsch bestimmt wird, der Ausgabe-Abschnitt die Warnung bereitstellt, und die durch den Kommunikations-Abschnitt empfangene Information betreffend das Transport-Fahrzeug ausgibt.

7. Navigationsapparat nach Anspruch 1, wobei die Kommunikations-Information eine Identifizierungs-Information des Einstiegspunkts umfasst, und
wobei, falls der Einstiegspunkt als falsch bestimmt wird, der Ausgabe-Abschnitt die Warnung bereitstellt, und die durch den Kommunikations-Abschnitt empfangene Identifizierungs-Information des Einstiegspunkts ausgibt.

8. Navigationsapparat nach Anspruch 1, wobei die Kommunikations-Information eine Information betreffend die Abfahrtszeit und/oder Ankunftszeit des Transport-Fahrzeugs umfasst, und
der Weg-Leitungs-Abschnitt einen Restzeitberechnungs-Abschnitt zum Berechnen einer verbleibenden Restzeit bis zu einer Abfahrtszeit des Transport-Fahrzeugs, mit dem der Benutzer eine Fahrt ausführen soll, umfasst, auf der Grundlage der durch den Kommunikations-Abschnitt empfangenen Information betreffend die Abfahrtszeit und/oder Ankunftszeit, falls der Einstiegspunkt als falsch bestimmt wird, und
wobei, falls der Einstiegspunkt als falsch bestimmt wird, der Ausgabe-Abschnitt die Warnung bereitstellt, und die durch den Restzeitberechnungs-Abschnitt berechnete Restzeit ausgibt.

9. Navigationsapparat nach Anspruch 1, wobei die Kommunikations-Information eine Positions-Information umfasst, welche einer Niveauhöhe entspricht, auf der sich in einem Bauwerk die Basisstation befindet; und
die Karten-Information der Niveauhöhe entsprechende Karten-Daten umfasst.

10. Navigationsapparat nach Anspruch 1, wobei der Ausgabe-Abschnitt zumindest ein Geräusch oder eine Vibration verwendet, um dem Benutzer die durch den Warnungserzeugungs-Abschnitt eingegebene Warnungs-Information zu präsentieren.

11. Navigationssystem, umfassend:
einen Navigationsapparat zum Bereitstellen einer Weg-Leitung zu einer Bestimmungsort-Position, um eine Fahrt mit einem Transport-Fahrzeug zu ermöglichen, wenn ein berechneter Weg, enthaltend eine Fahrt mit dem entlang eines vorgegebenen Dienstwegs betriebenen Transport-Fahrzeug, für eine Reise zwischen einer Start-Position und einer Bestimmungsort-Position bestimmt wird; und
eine Basisstation, die mit einem Einstiegspunkt des Transport-Fahrzeugs verknüpft ist,
wobei die Basisstation eine Kommunikations-Information welche eine Information betreffend den Einstiegspunkt umfasst, zum Navigationsapparat übermittelt,
wobei der Navigationsapparat umfasst:
einen Eingabe-Abschnitt (2), im den eine Instruktion von einem Benutzer eingegeben wird;
einen Positionsermittlungs-Abschnitt (4) zum Ermitteln
einer gegenwärtigen Position;
einen Kartendatenspeicher-Abschnitt (3) zum vorhergehenden Speichern von Karten-Information;
einen Weg-Auswahl-Abschnitt (6) zum Auswählen eines Wegs zu der Bestimmungsort-Position, enthaltend den Dienstweg des Transport-Fahrzeugs, mit dem der Benutzer eine Fahrt ausführen soll, auf der Grundlage der über den Eingabe-Abschnitt eingegebenen Instruktion, der durch den Positionsermittlungs-Abschnitt ermittelten gegenwärtigen Position, und der im Kartendatenspeicher-Abschnitt gespeicherten Karten-Information;
einen Weg-Leitungs-Abschnitt (8) zum Erzeugen von Weg-Leitungs-Information für die Weg-Leitung auf der Grundlage des durch den Weg-Auswahl-Abschnitt ausgewählten Wegs, der durch den Positionsermittlungs-Abschnitt ermittelten gegenwärtigen Position, und der im Kartendatenspeicher-Abschnitt gespeicherten Karten-Information;
einen Kommunikations-Abschnitt (7) zum Empfangen einer Kommunikations-Information, welche von der Basisstation übermittelt wird;
einen Warnungserzeugungs-Abschnitt (8) zum Erzeugen von Warnungs-Information, auf deren Grundlage eine Warnung für den Benutzer bereitgestellt wird, wenn der Einstiegspunkt während der Weg-Leitung durch den Weg-Leitungs-Abschnitt als falsch bestimmt wird, auf der Grundlage der durch den Kommunikations-Abschnitt empfangenen Information betreffend den Einstiegspunkt; und
einen Ausgabe-Abschnitt (5) zum Bereitstellen einer Warnung für der Benutzer auf der Grundlage der durch den Warnungserzeugungs-Abschnitt eingegebenen Warnungs-Information.

12. Navigationssystem nach Anspruch 11, umfassend eine Vielzahl von Basisstationen, welche mit unterschiedlichen Einstiegspunkten verknüpft sind, wobei sich Abdeckungsbereiche der Vielzahl der Basisstationen gegenseitig nicht überlappen.

13. Navigationsverfahren zum Bereitstellen einer Weg-Leitung zu einer Bestimmungsort-Position, um eine Fahrt mit einem Transport-Fahrzeug zu ermöglichen, wenn ein berechneter Weg enthaltend eine Fahrt mit einem entlang eines vorgegebenen Dienstwegs betriebenen Transport-Fahrzeug für eine Reise zwischen einer Start-Position und einer Bestimmungsort-Position bestimmt wird,
wobei das Navigationsverfahren umfasst:
einen Eingabe-Schritt zum Eingeben einer Instruktion von einem Benutzer;
einen Positionsermittlungs-Schritt zum Ermitteln einer gegenwärtigen Position;
einen Weg-Auswahl-Schritt zum Auswählen eines Wegs zu der Bestimmungsort-Position, enthaltend den Dienstweg des Transport-Fahrzeugs, mit dem der Benutzer eine Fahrt ausführen soll, auf der Grundlage der durch den Eingabe-Schritt eingegebenen Instruktion, der durch den Positionsermittlungs-Schritt ermittelten gegenwärtigen Position, und der zuvor bereitgestellten Karten-Information;
einen Weg-Leitungs-Schritt zum Erzeugen von Weg-Leitungs-Information für die Weg-Leitung, auf der Grundlage des durch den Weg-Auswahl-Schritt ausgewählten Wegs, der durch den Positionsermittlungs-Schritt ermittelten gegenwärtigen Position, und der Karten-Information;
einen Kommunikations-Schritt zum Empfangen von Kommunikations-Information, welche von einer mit einem Einstiegspunkt für das Transport-Fahrzeug verknüpften Basisstation übermittelt wird, wobei die Kommunikations-Information eine Information betreffend den Einstiegspunkt umfasst;
einen Warnungserzeugungs-Schritt zum Erzeugen von Warnungs-Information, auf deren Grundlage eine Warnung für den Benutzer bereitgestellt wird, wenn der Einstiegspunkt während der Weg-Leitung durch den Weg-Leitungs-Schritt als falsch bestimmt wird, auf der Grundlage der durch den Kommunikations-Schritt empfangenen Information betreffend den Einstiegspunkt; und
einen Ausgabe-Schritt zum Bereitstellen einer Warnung für den Benutzer, auf der Grundlage der durch den Warnungserzeugungs-Schritt erzeugten Warnungs-Information.

14. Navigationsverfahren nach Anspruch 13, wobei die Kommunikations-Information eine Positions-Information betreffend den Einstiegspunkt umfasst, und
wobei, wenn der Einstiegspunkt als falsch bestimmt wird,
der Weg-Auswahlschritt einen neuen Weg auswählt, enthaltend einen Weg zu einem richtigen Einstiegspunkt vom falschen Einstiegspunkt als Ausgangspunkt, auf der Grundlage der durch den Eingabe-Schritt eingegebenen Instruktion, der Karten-Information, und der durch den Kommunikations-Schritt empfangenen Positions-Information;
der Weg-Leitungsschritt neue Weg-Leitungs-Information erzeugt, auf der Grundlage des durch den Weg-Auswahlschritt ausgewählten neuen Wegs, der Karten-Information, und der durch den Kommunikations-Schritt empfangenen Positions-Information; und
der Ausgabe-Schritt die Warnung bereitstellt, und auf der Grundlage der durch den Weg-Leitungsschritt neu erzeugten Weg-Leitungs-Information eine Weg-Leitung bereitstellt.

15. Navigationsverfahren nach Anspruch 13, wobei die Kommunikations-Information eine Positions-Information betreffend den Einstiegspunkt umfasst, und
wobei der Weg-Leitungs-Schritt auf die durch den Kommunikations-Schritt empfangenen Positions-Information Bezug nimmt, und den Einstiegspunkt als falsch bestimmt, falls die Positions-Information eine Abweichung vom ausgewählten Weg anzeigt.

16. Navigationsverfahren nach Anspruch 13, wobei die Kommunikations-Information eine Identifizierungs-Information über den Einstiegspunkt umfasst, und
wobei der Weg-Leitungs-Schritt den Einstiegspunkt als falsch bestimmt, falls der Einstiegspunkt, welcher durch die durch den Kommunikations-Schritt empfangene Identifizierungs-Information angezeigt wird, kein Einstiegspunkt auf dem ausgewählten Weg ist.

17. Navigationsverfahren nach Anspruch 13, wobei die Kommunikations-Information eine Information betreffend den Dienstweg eines Transport-Fahrzeugs umfasst, welches in den Einstiegspunkt einfährt oder daraus herausfährt, und
wobei der Weg-Leitungs-Schritt den Einstiegspunkt als falsch bestimmt, falls der Dienstweg, welcher durch die Information betreffend den durch den Kommunikations-Schritt empfangenen Dienstweg angezeigt wird, vom ausgewählten Weg abweicht.

18. Navigationsverfahren nach Anspruch 13, wobei der Ausgabe-Schritt zumindest ein Geräusch oder eine Vibration verwendet, um dem Benutzer die durch den Warnungserzeugungs-Schritt erzeugte Warnungs-Information zu präsentieren.

19. Computerlesbares Aufzeichnungsmedium, auf dem ein Programm aufgezeichnet ist, welches einen Navigationsapparat dazu veranlasst, einen Prozess zum Bereitstellen einer Weg-Leitung zu einer Bestimmungsort-Position auszuführen, um eine Fahrt mit einem Transport-Fahrzeug zu ermöglichen, wenn ein berechneter Weg enthaltend eine Fahrt mit einem entlang eines vorgegebenen Dienstwegs betriebenen Transport-Fahrzeug, für eine Reise zwischen einer Start-Position und einer Bestimmungsort-Position bestimmt wird,
wobei der Prozess umfasst:
einen Eingabe-Schritt des Eingebens einer Instruktion von einem Benutzer;
einen Positionsermittlungs-Schritt zum Ermitteln einer gegenwärtigen Position;
einen Weg-Auswahl-Schritt des Auswählens eines Wegs zu der Bestimmungsort-Position, enthaltend den Dienstweg des Transport-Fahrzeugs, mit dem der Benutzer eine Fahrt ausführen soll, auf der Grundlage der durch den Eingabe-Schritt eingegebenen Instruktion, der durch den Positionsermittlungs-Schritt ermittelten gegenwärtigen Position, und der zuvor bereitgestellten Karten-Information;
einen Weg-Leitungs-Schritt des Erzeugens von Weg-Leitungs-Information für die Weg-Leitung, auf der Grundlage des durch den Weg-Auswahl-Schritt ausgewählten Wegs, der durch den Positionsermittlungs-Schritt ermittelten gegenwärtigen Position, und der Karten-Information;
einen Kommunikations-Schritt des Empfangens von Kommunikations-Information, welche von einer mit einem Einstiegspunkt für das Transport-Fahrzeug verknüpften Basisstation übermittelt wird, wobei die Kommunikations-Information eine Information betreffend den Einstiegspunkt umfasst;
einen Warnungserzeugungs-Schritt des Erzeugens von Warnungs-Information, auf deren Grundlage eine Warnung für den Benutzer bereitgestellt wird, wenn der Einstiegspunkt während der Weg-Leitung durch den Weg-Leitungs-Schritt als falsch bestimmt wird, auf der Grundlage der durch den Kommunikations-Schritt empfangenen Information betreffend den Einstiegspunkt; und
einen Ausgabe-Schritt zum Bereitstellen einer Warnung für den Benutzer, auf der Grundlage der durch den Warnungserzeugungs-Schritt erzeugten Warnungs-Information.

20. Programm zum Ausführen eines Prozesses zum Bereitstellen einer Weg-Leitung zu einer Bestimmungsort-Position auf einem Navigationsapparat, um eine Fahrt mit einem Transport-Fahrzeug zu ermöglichen, wenn ein berechneter Weg enthaltend eine Fahrt mit dem entlang eines vorgegebenen Dienstwegs betriebenen Transport-Fahrzeug für eine Reise zwischen einer Start-Position und der Bestimmungsort-Position bestimmt wird,
wobei der Prozess umfasst:
einen Eingabe-Schritt zum Eingeben einer Instruktion von einem Benutzer;
einen Positionsermittlungs-Schritt zum Ermitteln einer gegenwärtigen Position;
einen Weg-Auswahl-Schritt zum Auswählen eines Wegs zu der Bestimmungsort-Position, enthaltend den Dienstwegs des Transport-Fahrzeugs, mit dem der Benutzer eine Fahrt ausführen soll, auf der Grundlage der durch den Eingabe-Schritt eingegebenen Instruktion, der durch den Positionsermittlungs-Schritt ermittelten gegenwärtigen Position, und der zuvor bereitgestellten Karten-Information;
einen Weg-Leitungs-Schritt zum Erzeugen von Weg-Leitungs-Information für die Weg-Leitung, auf der Grundlage des durch den Weg-Auswahl-Schritt ausgewählten Wegs, der durch den Positionsermittlungs-Schritt ermittelten gegenwärtigen Position, und der Karten-Information;
einen Kommunikations-Schritt zum Empfangen von Kommunikations-Information, welche von einer mit einem Einstiegspunkt für das Transport-Fahrzeug verknüpften Basisstation übermittelt wird, wobei die Kommunikations-Information eine Information betreffend den Einstiegspunkt umfasst;
einen Warnungserzeugungs-Schritt, zum Erzeugen von Warnungs-Information, auf deren Grundlage eine Warnung für den Benutzer bereitgestellt wird, wenn der Einstiegspunkt während der Weg-Leitung durch den Weg-Leitungs-Schritt als falsch bestimmt wird, auf der Grundlage der durch den Kommunikations-Schritt empfangenen Information betreffend den Einstiegspunkt; und
einen Ausgabe-Schritt, zum Bereitstellen einer Warnung für den Benutzer, auf der Grundlage der durch den Warnungserzeugungs-Schritt erzeugten Warnungs-Information.

## Revendications

1. Dispositif de navigation destiné à fournir, lorsqu'un trajet calculé comprenant un parcours sur un véhicule de transport qui est mis en oeuvre le long d'un itinéraire de service prédéterminé est conçu en vue d'un voyage entre un emplacement de départ et un emplacement de destination, un guidage d'itinéraire vers l'emplacement de destination afin de permettre un parcours sur le véhicule de transport,
dans lequel le dispositif de navigation comprend :
une section d'entrée (2) à laquelle une instruction provenant d'un utilisateur est appliquée en entrée,
une section de détection de position (4) destinée à détecter une position en cours,
une section de mémorisation de données de carte (3) destinée à mémoriser au préalable des informations de carte,
une section de sélection d'itinéraire (6) destinée à sélectionner un itinéraire vers l'emplacement de destination comprenant l'itinéraire de service du véhicule de transport sur lequel l'utilisateur doit effectuer un parcours, sur la base de l'instruction appliquée en entrée par l'intermédiaire de la section d'entrée, de la position en cours détectée par la section de détection de position, et des informations de carte mémorisées dans la section de mémorisation de données de carte,
une section de guidage d'itinéraire (8) destinée à générer des informations de guidage d'itinéraire pour le guidage d'itinéraire sur la base de l'itinéraire sélectionné par la section de sélection d'itinéraire, de la position en cours détectée par la section de détection de position, et des informations de carte mémorisées dans la section de mémorisation de données de carte,
une section de communication (7) destinée à recevoir des informations de communication transmises depuis une station de base qui est disposée en association avec un point d'embarquement pour le véhicule de transport, les informations de communication comprenant les informations concernant le point d'embarquement,
une section de génération d'avertissement (8) destinée à générer des informations d'avertissement sur la base desquelles fournir un avertissement à l'utilisateur lorsque le point d'embarquement est défini comme étant incorrect pendant le guidage d'itinéraire par la section de guidage d'itinéraire sur la base des informations concernant le point d'embarquement reçues par la section de communication, et
une section de sortie (5) destinée à fournir un avertissement à l'utilisateur sur la base des informations d'avertissement reçues en entrée depuis la section de génération d'avertissement.

2. Dispositif de navigation selon la revendication 1, dans lequel les informations de communication comprennent les informations de position concernant le point d'embarquement, et
dans lequel, lorsque le point d'embarquement est défini comme étant incorrect,
la section de sélection d'itinéraire sélectionne un nouvel itinéraire comprenant un itinéraire vers un point d'embarquement correct à partir du point d'embarquement incorrect en tant qu'emplacement de départ, sur la base de l'instruction appliquée en entrée depuis la section d'entrée, des informations de carte mémorisées dans la section de mémorisation de données de carte et des informations de position reçues par la section de communication,
la section de guidage d'itinéraire génère de nouvelles informations de guidage d'itinéraire sur la base du nouvel itinéraire sélectionné par la section de sélection d'itinéraire, des informations de carte mémorisées dans la section de mémorisation de données de carte, et des informations de position reçues par la section de communication, et
la section de sortie fournit l'avertissement, et fournit un guidage d'itinéraire sur la base des informations de guidage d'itinéraire nouvellement générées par la section de guidage d'itinéraire.

3. Dispositif de navigation selon la revendication 1, dans lequel les informations de communication comprennent des informations de position concernant le point d'embarquement, et
dans lequel la section de guidage d'itinéraire se réfère aux informations de position reçues par la section de communication, et définit le point d'embarquement comme étant incorrect si les informations de position indiquent un écart par rapport à l'itinéraire sélectionné.

4. Dispositif de navigation selon la revendication 1, dans lequel les informations de communication comprennent des informations d'identification du point d'embarquement, et
dans lequel la section de guidage d'itinéraire définit le point d'embarquement comme étant incorrect si le point d'embarquement indiqué par les informations d'identification reçues par la section de communication n'est pas un point d'embarquement sur l'itinéraire sélectionné.

5. Dispositif de navigation selon la revendication 1, dans lequel les informations de communication comprennent des informations concernant un itinéraire de service d'un véhicule de transport s'arrêtant au point d'embarquement et repartant de celui-ci, et
dans lequel la section de guidage d'itinéraire détermine le point d'embarquement comme étant incorrect si l'itinéraire de service indiqué par les informations concernant l'itinéraire de service reçues par la section de communication s'écarte de l'itinéraire sélectionné.

6. Dispositif de navigation selon la revendication 1, dans lequel les informations de communication comprennent des informations concernant le véhicule de transport, et
dans lequel, si le point d'embarquement est défini comme étant incorrect, la section de sortie fournit l'avertissement, et fournit en sortie les informations concernant le véhicule de transport reçues par la section de communication.

7. Dispositif de navigation selon la revendication 1, dans lequel les informations de communication comprennent des informations d'identification du point d'embarquement et
dans lequel, si le point d'embarquement est défini comme étant incorrect, la section de sortie fournit l'avertissement, et fournit en sortie les informations d'identification du point d'embarquement reçues par la section de communication.

8. Dispositif de navigation selon la revendication 1, dans lequel les informations de communication comprennent des informations concernant l'heure de départ et/ou d'arrivée du véhicule de transport, et
la section de guidage d'itinéraire comprend une section de calcul de temps restant destinée à calculer, si le point d'embarquement est défini comme étant incorrect, un temps restant jusqu'à une heure de départ du véhicule de transport sur lequel l'utilisateur doit effectuer un parcours, sur la base des informations concernant l'heure de départ et/ou d'arrivée reçues par la section de communication, et
dans lequel, si le point d'embarquement est défini comme étant incorrect, la section de sortie fournit l'avertissement, et fournit en sortie le temps restant calculé par la section de calcul de temps restant.

9. Dispositif de navigation selon la revendication 1,
dans lequel les informations de communication comprennent des informations de position correspondant à une hauteur d'un niveaux sur lequel la station de base est située à l'intérieur d'une structure, et
les informations de carte comprennent des données de carte correspondant à la hauteur du niveau.

10. Dispositif de navigation selon la revendication 1, dans lequel la section de sortie emploie au moins l'un d'un son et d'une vibration pour présenter à l'utilisateur les informations d'avertissement appliquées en entrée depuis la section de génération d'avertissement.

11. Système de navigation comprenant :
un dispositif de navigation destiné à fournir, lorsqu'un trajet calculé comprenant un parcours sur un véhicule de transport qui est mis en oeuvre le long d'un itinéraire de service prédéterminé est conçu pour un voyage entre un emplacement de départ et un emplacement de destination, un guidage d'itinéraire vers l'emplacement de destination afin de permettre un parcours sur le véhicule de transport, et
une station de base qui est disposée en association avec un point d'embarquement pour le véhicule de transport,
dans lequel la station de base transmet des informations de communication comprenant des informations concernant le point d'embarquement au dispositif de navigation,
dans lequel le dispositif de navigation comprend :
une section d'entrée (2) à laquelle une instruction provenant d'un utilisateur est appliquée en entrée,
une section de détection de position (4) destinée à détecter une position en cours,
une section de mémorisation de données de carte (3) destinée à mémoriser au préalable des informations de carte,
une section de sélection d'itinéraire (6) destinée à sélectionner un itinéraire vers l'emplacement de destination comprenant l'itinéraire de service du véhicule de transport sur lequel l'utilisateur doit effectuer un parcours, sur la base de l'instruction appliquée en entrée par l'intermédiaire de la section d'entrée, de la position en cours détectée par la section de détection de position, et des informations de carte mémorisées dans la section de mémorisation de données de carte,
une section de guidage d'itinéraire (8) destinée à générer des informations de guidage d'itinéraire pour le guidage d'itinéraire sur la base de l'itinéraire sélectionné par la section de sélection d'itinéraire, de la position en cours détectée par la section de détection de position, et des informations de carte mémorisées dans la section de mémorisation de données de carte,
une section de communication (7) destinée à recevoir les informations de communication transmises depuis la station de base,
une section de génération d'avertissement (8) destinée à générer des informations d'avertissement sur la base desquelles fournir un avertissement à l'utilisateur lorsque le point d'embarquement est défini comme étant incorrect pendant le guidage d'itinéraire par la section de guidage d'itinéraire sur la base des informations concernant le point d'embarquement reçues par la section de communication, et
une section de sortie (5) destinée à fournir un avertissement à l'utilisateur sur la base des informations d'avertissement reçues en entrée depuis la section de génération d'avertissement.

12. Système de navigation selon la revendication 11, comprenant une pluralité desdites stations de base disposées en association avec différents points d'embarquement, dans lequel les zones de couverture de la pluralité des stations de base ne se chevauchent pas mutuellement.

13. Procédé de navigation destiné à fournir, lorsqu'un trajet calculé comprenant un parcours sur un véhicule de transport qui est mis en oeuvre le long d'un itinéraire de service prédéterminé est conçu pour un voyage entre un emplacement de départ et un emplacement de destination, un guidage d'itinéraire vers l'emplacement de destination afin de permettre un parcours sur le véhicule de transport,
dans lequel le procédé de navigation comprend :
une étape d'entrée consistant à appliquer en entrée une instruction provenant d'un utilisateur,
une étape de-détection de position consistant à détecter une position en cours,
une étape de sélection d'itinéraire consistant à sélectionner un itinéraire vers l'emplacement de destination Comprenant l'itinéraire de service du véhicule de transport sur lequel l'utilisateur doit effectuer un parcours, sur la base de l'instruction appliquée en entrée par l'étape d'entrée, de la position en cours détectée par l'étape de détection de position, et des informations de carte fournies au préalable,
une étape de guidage d'itinéraire consistant à générer des informations de guidage d'itinéraire pour le guidage d'itinéraire sur la base de l'itinéraire sélectionné par l'étape de sélection d'itinéraire, de la position en cours détectée par l'étape de détection de position, et des informations de carte,
une étape de communication consistant à recevoir des informations de communication transmises depuis une station de base, laquelle est disposée en association avec un point d'embarquement pour le véhicule de transport, les informations de communication comprenant les informations concernant le point d'embarquement,
une étape de génération d'avertissement consistant à générer des informations d'avertissement sur la base desquelles fournir un avertissement à l'utilisateur lorsque le point d'embarquement est défini comme étant incorrect pendant le guidage d'itinéraire par l'étape de guidage d'itinéraire sur la base des informations concernant le point d'embarquement reçues par l'étape de communication, et
une étape de sortie consistant à fournir un avertissement à l'utilisateur sur la base des informations d'avertissement engendrées par l'étape de génération d'avertissement.

14. Procédé de navigation selon la revendication 13, dans lequel les informations de communication comprennent les informations de position concernant le point d'embarquement, et
dans lequel, lorsque le point d'embarquement est défini comme étant incorrect,
l'étape de sélection d'itinéraire sélectionne un nouvel itinéraire comprenant un itinéraire vers un point d'embarquement correct à partir du point d'embarquement incorrect en tant qu'emplacement de départ, sur la base des instructions appliquées en entrée par l'étape d'entrée, des informations de carte, et des informations de position reçues par l'étape de communication,
l'étape de guidage d'itinéraire génère de nouvelles. informations de guidage d'itinéraire sur la base du nouvel itinéraire sélectionné par l'étape de sélection d'itinéraire, des informations de carte, et des informations de position reçues par l'étape de communication, et
l'étape de sortie fournit l'avertissement, et fournit un guidage d'itinéraire sur la base des informations de guidage d'itinéraire nouvellement générées par l'étape de guidage d'itinéraire.

15. Procédé de navigation selon la revendication 13, dans lequel les informations de communication comprennent des informations de position concernant le point d'embarquement, et
dans lequel l'étape de guidage d'itinéraire se réfère aux informations de position reçues par l'étape de communication, et définit le point d'embarquement comme étant incorrect si les informations de position indiquent un écart par rapport à l'itinéraire sélectionné.

16. Procédé de navigation selon la revendication 13, dans lequel les informations de communication comprennent des informations d'identification du point d'embarquement, et
dans lequel l'étape de guidage d'itinéraire définit le point d'embarquement comme étant incorrect si le point d'embarquement indiqué par les informations d'identification reçues par l'étape de communication n'est pas un point d'embarquement sur l'itinéraire sélectionné.

17. Procédé de navigation selon la revendication 13, dans lequel les informations de communication comprennent des informations concernant un itinéraire de service d'un véhicule de transport s'arrêtant et repartant du point d'embarquement, et
dans lequel l'étape de guidage d'itinéraire définit le point d'embarquement comme étant incorrect si l'itinéraire de service indiqué par les informations concernant l'itinéraire de service reçues par l'étape de communication s'écarte de l'itinéraire sélectionné.

18. Procédé de navigation selon la revendication 13, dans lequel l'étape de sortie emploie au moins l'un d'un son et d'une vibration pour présenter à l'utilisateur des informations d'avertissement générées par l'étape de génération d'avertissement.

19. Support d'enregistrement lisible par un ordinateur comportant un programme enregistré sur celui-ci destiné à amener une dispositif de navigation à exécuter un traitement destiné à fournir, lorsqu'un trajet calculé comprenant un parcours sur un véhicule de transport qui est mis en oeuvre le long d'un itinéraire de service prédéterminé est conçu pour un voyage entre un emplacement de départ et un emplacement de destination, un guidage d'itinéraire vers l'emplacement de destination afin de permettre un parcours sur le véhicule de transport,
dans lequel le traitement comprend :
une étape d'entrée consistant à appliquer en entrée une instruction à partir d'un utilisateur,
une étape de détection de position consistant à détecter une position en cours,
une étape de sélection d'itinéraire consistant à sélectionner un itinéraire vers l'emplacement de destination comprenant l'itinéraire de service du véhicule de transport sur lequel l'utilisateur doit effectuer un parcours, sur la base de l'instruction appliquée en entrée par l'étape d'entrée, de la position en cours détectée par l'étape de détection de position, et des informations de carte fournies au préalable,
une étape de guidage d'itinéraire consistant à générer des informations de guidage d'itinéraire pour le guidage d'itinéraire sur la base de l'itinéraire sélectionné par l'étape de sélection d'itinéraire, de la position en cours détectée par l'étape de détection de position, et des informations de carte,
une étape de communication consistant à recevoir des informations de communication transmises depuis une station de base, qui est disposée en association avec un point d'embarquement pour le véhicule de transport, les informations de communication comprenant des informations concernant le point d'embarquement,
une étape de génération d'avertissement consistant à générer des informations d'avertissement sur la base desquelles fournir un avertissement à l'utilisateur lorsque le point d'embarquement est défini comme étant incorrect pendant le guidage d'itinéraire par l'étape de guidage d'itinéraire sur la base des informations concernant le point d'embarquement reçues par l'étape de communication, et
une étape de sortie consistant à fournir un avertissement à l'utilisateur sur la base des informations d'avertissement générées par l'étape de génération d'avertissement.

20. Programme destiné à amener un dispositif de navigation à exécuter un traitement destiné à fournir, lorsqu'un trajet calculé comprenant un parcours sur un véhicule de transport qui est mis en oeuvre le long d'un itinéraire de service prédéterminé est conçu pour un voyage entre un emplacement de départ et un emplacement de destination, un guidage d'itinéraire vers l'emplacement de destination afin de permettre un parcours sur le véhicule de transport,
dans lequel le traitement comprend :
une étape d'entrée consistant à appliquer en entrée une instruction à partir d'un utilisateur,
une étape de détection de position consistant à détecter une position en cours,
une étape de sélection d'itinéraire consistant à sélectionner un itinéraire vers l'emplacement de destination comprenant l'itinéraire de service du véhicule de transport sur lequel l'utilisateur doit effectuer un parcours, sur la base de l'instruction appliquée en entrée par l'étape d'entrée, de la position en cours détectée par l'étape de détection de position, et des informations de carte fournies au préalable,:
une étape de guidage d'itinéraire consistant à générer des informations de guidage d'itinéraire pour le guidage d'itinéraire sur la base de l'itinéraire sélectionné par l'étape de sélection d'itinéraire, de la position en cours détectée par l'étape de détection de position, et des informations de carte,
une étape de communication consistant à recevoir des informations de communication transmises depuis une station de base, qui est disposée en association avec un point d'embarquement destiné au véhicule de transport, les informations de communication comprenant les informations concernant le point d'embarquement,
une étape de génération d'avertissement consistant à générer des informations d'avertissement sur la base desquelles fournir un avertissement à l'utilisateur lorsque le point d'embarquement est défini comme étant incorrect pendant le guidage d'itinéraire par l'étape de guidage d'itinéraire sur la base des informations concernant le point d'embarquement reçues par l'étape de communication, et
une étape de sortie consistant à fournir un avertissement à l'utilisateur sur la base des informations d'avertissement générées par l'étape de génération d'avertissement.
